# EUROPÄISCHE PATENTSCHRIFT

(11) **EP 2 815 090 B1**
(45) Veröffentlichungstag und Bekanntmachung des Hinweises auf die Patenterteilung: **11.01.2017**
(21) Anmeldenummer: 13701021.1
(22) Anmeldetag: 18.01.2013
(51) Int. Cl.: F01N 3/20

(54) **DOSIERMODUL ZUM EINBRINGEN EINES FLÜSSIGEN STOFFES IN DAS ABGAS EINER BRENNKRAFTMASCHINE**
METERING MODULE FOR INTRODUCING A FLUID SUBSTANCE INTO THE EXHAUST GAS OF AN INTERNAL COMBUSTION ENGINE
MODULE DE DOSAGE POUR L'INTRODUCTION D'UNE SUBSTANCE LIQUIDE DANS LE GAZ D'ÉCHAPPEMENT D'UN MOTEUR À COMBUSTION INTERNE

(30) Priorität: 14.02.2012 DE 102012202188
(43) Veröffentlichungstag der Anmeldung: 24.12.2014
(73) Patentinhaber: Robert Bosch GmbH, 70442 Stuttgart (DE)
(72) Erfinder: BEGANOVIC, Arnad, 70499 Stuttgart-Weilimdorf (DE)
(86) Internationale Anmeldenummer: PCT/EP2013/050878
(87) Internationale Veröffentlichungsnummer: WO 2013/120651

(56) Entgegenhaltungen:
- WO-A1-2012/152466
- WO-A1-2012/175285
- DE-A1-102007 003 120
- DE-A1-102009 047 375
- DE-C1- 19 856 366

## Beschreibung

### Stand der Technik

Die Erfindung geht aus von einem Dosiermodul zum Einbringen eines schadstoffvermindernden Mediums, insbesondere ein Reduktionsmittel und/oder ein Reduktionsmittel-Vorläufer, in ein in einem Abgasstrang einer Brennkraftmaschine strömendes Abgas. In derartigen Dosiermodulen kommen elektromagnetisch steuerbare Dosierventile zum Einsatz, welche von einer Antriebseinheit betätigt werden. Beim Öffnen und Schließen des Dosierventils kann es grundsätzlich zum Ablagern von Tropfen von Reduktionsmittel, beispielsweise eine wässrige Harnstofflösung (AdBue) in kritischen Bereichen kommen, wobei sich im Folgenden aus dem abgeschiedenen AdBlue kristalliner Harnstoff bilden kann, bei heißeren Temperaturen auch geschmolzener Harnstoff und Folgeprodukte. Derartige Ablagerungen können zu einer Hemmung des Durchflusses und damit zu einer Fehldosierung des Dosierventils führen.

Aus DE 10 2006 061 730 ist eine SCR-Injektionseinrichtung zur Einspritzung, insbesondere einer wässrigen Harnstofflösung ("AdBlue®") in den Abgastrakt einer Brennkraftmaschine bekannt, so dass in einem nachgeordneten Katalysator zur selektiven katalytischen Reduktion im Abgas der Brennkraftmaschine enthaltene Stickoxide reduziert werden können. Um das Reduktionsmittel in geeigneter Weise einzubringen, ist der Injektor nahe dem heißen Abgasrohr positioniert, insbesondere in einem zurückgesetzten Stutzen, um den Injektor vor Hitze des Abgases zu schützen. Um den Wärmeeintrag in den Injektor weiter zu reduzieren, ist ein Hülsenelement mit einem dünnwandigen Verbindungsabschnitt vorgesehen, der einerseits mit dem Flansch des Abgasrohres und andererseits mit einer Haltestruktur für den Injektor mindestens mittelbar kraftschlüssig verbunden ist. Das Hülsenelement ist derart ausgebildet, dass zwischen Haltestruktur und Hülsenelement ein thermisch isolierender Luftspalt vorhanden und im Bereich der Ventilspitze ein Schirmabschnitt ausgebildet ist.

Die WO 2012/152466 beschreibt einen Injektor zum Dosieren von Reduktionsmittel mit einem Kühlkörper und einem Hitzeschild.

Die WO 2012/175285 offenbart ein kühlbares Dosiermodul mit einer Hülsenanordnung.

Aus DE 10 2007 003 120 A1 ist ferner eine Einspritzvorrichtung, eine Halteeinrichtung und eine Kühleinrichtung zum Einbringen von Reduktionsmittel in das Abgas einer Brennkraftmaschine bekannt. Die Kühleinrichtung weist einen in der Halteeinrichtung ausgebildeten, von einem Kühlmedium durchströmten Kühlkanal auf und umfasst zwischen Halteeinrichtung und Injektor ein Kontaktelement mit guter Wärmeleitfähigkeit und einen Luftspalt in einem dem Abgaskanal benachbarten Bereich. Ferner ist zwischen Halteeinrichtung und Kontaktelement einerseits und Abgaskanal andererseits ein thermisches Isolationselement aufgenommen.

### Offenbarung der Erfindung

Das erfindungsgemäße Dosiermodul, umfassend ein Dosierventil, aufgenommen in einer Haltestruktur mit einer Kühleinrichtung mit den Merkmalen des unabhängigen Anspruchs ermöglicht in einzelnen Bereichen des Dosiermoduls eine gezielte Temperaturbeeinflussung, welche einfach und robust aufgebaut ist.

Das Dosiermodul wird aufgrund seiner Lage durch den unmittelbaren Kontakt mit dem heißen Abgas erwärmt. Desweitern besteht eine Wärmeleitung über die am Abgaskanal befestigte Haltestruktur in das Dosiermodul, wobei es zu Alterungsprozessen kommen kann. Insbesondere bei üblichen Reduktionsmitteln, die je nach Systemdruck, bei einer Temperatur von 140°C bis 160°C in die Dampfphase übergehen, kann es zum Sieden des Reduktionsmittels in dem Dosiermodul kommen und damit verbunden einer Fehldosierung. Mit der erfindungsgemäß bereitgestellten Temperierung des Dosierventils kann ein Sieden von im Dosierventil vorhandenem Reduktionsmittel und eine mit der Alterung des Reduktionsmittels verbundene Korrosionsneigung vermieden werden. Ferner kann vermieden werden, dass eventuelle Ablagerungen des Reduktionsmittels auskristallieren und möglicherweise eine Hemmung des Einspritzvorganges hervorrufen.

Das erfindungsgemäße Dosiermodul umfasst eine Haltestruktur und eine Kühleinrichtung, welche an der Haltestruktur aufgenommen ist, um ausgewählte Bereiche des Dosierventils zu temperieren. Mit dem erfindungsgemäßen Dosiermodul wird ein Wärmeeintrag von dem Abgas über eine Dosierventilspitze in Bereiche des Dosierventils verringert, in denen es zum Sieden des im Dosierventil vorhandenen Reduktionsmittels kommen kann. Allerdings wird auch gewährleistet, dass Flächen, die beim Einbringen des Reduktionsmittels in das Abgas in Kontakt mit dem Reduktionsmittel stehen, insbesondere im Bereich der Ventilspitze, hohe Temperaturen aufweisen, so dass einer Kristallisation des Reduktionsmittels entgegengewirkt wird.

Hierzu umfasst die Kühleinrichtung ein mit der Haltestruktur verbindbares Hülsenelement, welches einen mit Kühlmittel beaufschlagbaren Raum bereitstellt, der weitgehend ringförmig Bereiche der Haltestruktur umschließt. Das Hülsenelement kann als Element aus einem hitzebeständigen Material kostengünstig hergestellt werden, insbesondere aus Metall durch Umformung. Das Hülsenelement kann mit der Haltestruktur stoffschlüssig verbunden werden, beispielsweise verschweißt werden. An der Haltestruktur können Anschlüsse an ein vorteilhaft in der Nähe der Einbaulage befindlichen Kühlmittelkreislauf vorgesehen sein, so dass der von dem Hülsenelement umschlossene Raum mit einem Einlass und einem Auslass einen mit Kühlmittel beaufschlagbaren Ringkanal bildet. Als Kühlmittel kann Kühlwasser oder auch Kraftstoff verwendet werden. Eine gezielte Beeinflussung des Wärmeübergangs zwischen der Kühleinrichtung der Haltestruktur und dem Dosierventil ist erfindungsgemäß bereitgestellt.

Der Wärmefluss von dem heißen Abgas über das Hülsenelement hinweg kann nochmals reduziert werden, wenn an dem Hülsenelement ein Blech aufgenommen wird, welches als Hitzeschild fungiert.

Eine einfache Montage der Haltestruktur am Abgasrohr wird dadurch erreicht, dass die Haltestruktur in einem zum Flansch des Abgasrohres benachbarten Bereich einen nach außen abragenden, umlaufenden Bund als Gegenflansch zum Flansch des Abgasrohres aufweist. Geeignet ist mindestens eine V-Schelle, welche in Einbaulage zur Befestigung der Haltestruktur am Flansch diesen Bund umgreift. An dem Bund können aber auch Ohren angeformt sein mit Durchgangsöffnungen, so dass die Montage der Haltestruktur mit dem Flansch über Befestigungselemente, insbesondere Schrauben, erfolgen kann.

Zur Verringerung des Wärmeeintrags zwischen Flansch des Abgasrohres zur Haltestruktur kann zwischen den beiden eine thermisches Isolationselement angeordnet sein. Ferner ist ein Dichtelement zwischen der Haltestruktur und dem Flansch vorgesehen, beispielsweise in Form einer Sickendichtung, wobei eine Abdichtung gegenüber dem Abgas erreicht wird.

Eine weitere Beeinflussung des Wärmeübergangs zwischen Haltestruktur und Dosierventil besteht darin, dass ein Kontaktelement aus einem Material mit hoher Wärmeleitfähigkeit derart zwischen Haltestruktur und Dosierventil eingebracht wird, dass ein besonders guter thermischer Kontakt erzielt wird. Hierfür kann insbesondere das Kontaktelement im Gegensatz zur Haltestruktur und Dosierventil eine geringere Steifigkeit aufweisen, so dass sich das Kontaktelement flächig und spielfrei an das Dosierventil und an die Haltestruktur anlegt. Somit kann aufgrund der hohen Wärmeleitfähigkeit des Kontaktelements die aus dem Abgas und dem Abgasrohr in das Dosierventil eingebrachte Wärme mit gutem Wirkungsgrad in die Haltestruktur und letztlich an das Kühlmittel abgeführt werden. Ein geeignetes Material des Kontaktelements ist Graphit, welches beispielsweise als Graphitbuchse im Presssitz zwischen Haltestruktur und Dosierventil aufgenommen ist.

Eine weitere Verbesserung des Wärmeübergangs vom Dosierventil über das Kontaktelement in die Haltestruktur und in das die Wärme abführende Kühlmittel wird erreicht, wenn die Haltestruktur in diesem Bereich eine geringere Wandstärke aufweist.

### Vorteile der Erfindung

Mit dem erfindungsgemäßen Dosiermodul ergibt sich, dass Bereiche des umfassten Dosierventils gezielt temperiert werden können. Insbesondere wird ein Wärmeeintrag, welcher durch Kontakt mit heißen Abgasen oder über das Abgasrohr erfolgt, durch eine Wärmeleitung vom Dosierventil, über ein Kontaktelement, in die Haltestruktur und in ein Kühlmittel erreicht, welches mit einem ausreichenden Volumen in einem durch ein mit der Haltestruktur verbundenes Hülsenelement bereitgestellt ist. Durch die Ausführung der Haltestruktur und ein damit verbindbares Hülsenelement ergibt sich vorteilhaft, dass beide Elemente entsprechend ihrer Funktion optimal hinsichtlich Konstruktion, Material und Anschlüsse gestaltet werden können. Insbesondere ist es vorteilhaft, dass das Volumen des Kühlmittels einfach variiert werden kann, in dem das Hülsenelement in einer bestimmten Gestalt und Größe gefertigt und an geeigneter Position mit der Haltestruktur verbunden wird.

Insbesondere kann das Hülsenelement aus Metall als Umformteil kostengünstig gefertigt werden, wobei so gegenüber herkömmlichen Keramikelementen ein robustes Element geschaffen werden kann.

Das Hülsenelement stellt das Volumen bereit, welches in Form eines die Haltestruktur umgebenden Ringkanals mit Kühlmittel beaufschlagt wird. Hierbei kann ein großes Volumen an Kühlmittel zur Verfügung gestellt werden, da im Gegensatz zu bisher bekannten hohlen Halteeinrichtungen keine engen konstruktiven Grenzen bestehen. Die Haltestruktur kann variationsreich gestaltet werden, wobei Anschlüsse zu einem in der Nähe des Einbauorts befindlichen Kühlmittelkreislauf vorgesehen werden, ebenso wie ein Anschluss beispielsweise zu einem Flansch am Abgasrohr und einer Aufnahme für das Dosierventil. Ferner ist vorgesehen, dass Flächen, mit denen das Reduktionsmittel in Kontakt steht, insbesondere in der Umgebung der Dosierstelle, eine ausreichend hohe Temperatur aufweisen, um einer Kristallisation des Reduktionsmittels entgegenzuwirken. Durch die erfindungsgemäßen Maßnahmen wird erreicht, dass insbesondere Bereiche des Dosierventils temperierbar sind und ein Wärmeeintrag über den Anschluss der Haltestruktur an das Abgasrohr reduziert wird, wobei eine Ablagerungsbildung im Bereich der Ventilspitze verringert wird. Die gezielte und möglicherweise bereichsweise Beeinflussung der Temperatur des Dosiermoduls führt zu einer Entlastung des Dosierventils und letztlich zu einer höheren Lebensdauer.

### Kurze Beschreibung der Zeichnungen

Ausführungsbeispiele der Erfindung sind in der Zeichnung dargestellt und in der nachfolgenden Beschreibung näher erläutert.

Es zeigen
- Figur 1: eine schematische Darstellung einer Brennkraftmaschine mit einem Dosiermodul;
- Figur 2: einen Schnitt durch eine Ausführungsform eines Bereichs des Dosiermoduls von Figur 1.

### Ausführungsformen der Erfindung

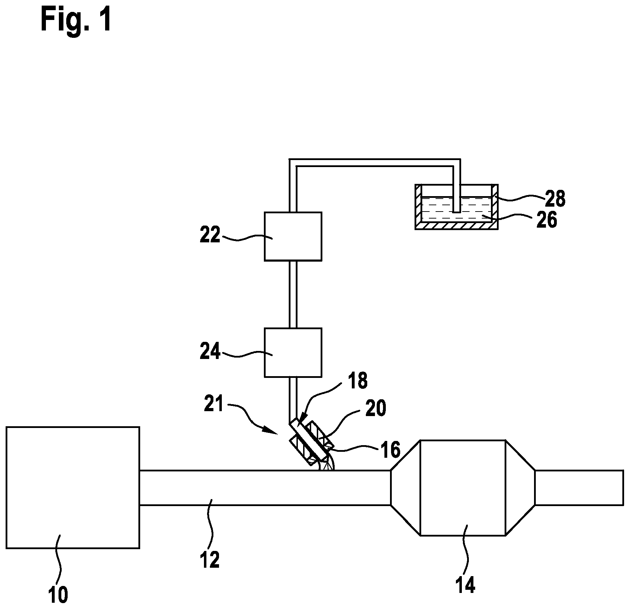

Eine Brennkraftmaschine ist in Figur 1 symbolisch dargestellt und mit Bezugszeichen 10 bezeichnet. Heißes Abgas wird durch ein Abgasrohr 12 einem SCR-Katalysator 14 zugeführt. Stromaufwärts von diesem ist an das Abgasrohr 12 ein Flansch 16 angeformt, an dem ein Dosiermodul 18 mit einer Haltestruktur 20 und einer Kühleinrichtung 21 (in Figur 1 nicht näher dargestellt) befestigt ist. Über eine Pumpe 22 und eine Ventileinrichtung 24 wird eine Harnstoff-Wasser-Lösung 26, die in einem Tank 28 bevorratet ist, dem Dosiermodul 18 zugeführt.

Wird im Betrieb der Brennkraftmaschine 10 die Harnstoff-Wasser-Lösung 26 von dem Dosiermodul 18 in das im Abgasrohr 12 strömende Abgas als feiner Spray eingespritzt, entsteht aus der Reaktion des Harnstoffs mit dem Wasser Ammoniak, welches anschließend im SCR-Katalysator 14 durch selektive katalytische Reduktion mit Stickstoffmonoxid und Stickstoffdioxid zu molekularem Stickstoff und Wasser umgewandelt wird.

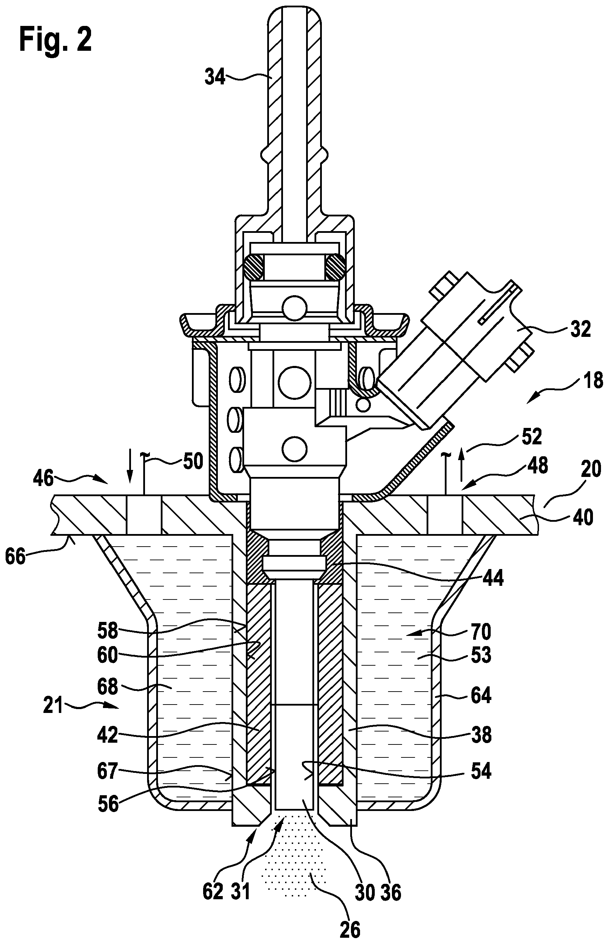

Eine Ausführungsform des Dosiermoduls 18 sowie die Haltestruktur 20 und die Kühleinrichtung 21 werden nun unter Bezugnahme auf Figur 2 näher erläutert. Das Dosiermodul 18 umfasst ein Dosierventil 30, dessen Ventilspitze 31 eine Düse (nicht sichtbar) aufweist, die die Harnstoff-Wasser-Lösung 26 zu einem feinen Sprühnebel zerstäubt. Das Dosierventil 30 weist einen elektrischen Stecker 32 zur Ansteuerung des Dosierventils 30 und einen Zulauf 34 zur Zuführung des schadstoffmindernden Mediums, insbesondere der Harnstoff-Wasser-Lösung 26, zum Dosierventil 30 auf.

Das Dosierventil 30 ist am Flansch 16 des Abgasrohres 12 über die Haltestruktur 20 befestigt. Die Haltestruktur 20 weist eine Aufnahme für das Dosierventil 30 auf, wobei dieses beispielsweise über ein Halteblech mit Befestigungselementen, z.B. Schrauben, an einem entsprechend ausgebildeten Aufnahmebereich der Haltestruktur 20 fixiert werden kann, welches allerdings nicht im Detail beschrieben wird. Insbesondere kann das Dosierventil 30 derart an der Haltestruktur 20 aufgenommen sein, dass ausreichend Raum für weitere Anschlüsse, beispielsweise zu einem Kühlsystem, vorhanden ist. Die Haltestruktur 20 ist im Bereich der Ventilspitze 31 hülsenförmig ausgebildet mit einer Hülsenwand, welche insgesamt eine z-förmige Querschnittsgeometrie aufweist. Sie umfasst, ausgehend von dem Dosierventil 30, einen sich radial nach auswärts erstreckenden ersten Bereich 36, einen sich an diesen anschließenden und insgesamt axial, in einem Abstand zum Dosierventil 30 verlaufenden zweiten Bereich 38 und einen sich an diesen anschließenden wiederum radial auswärts sich erstreckenden dritten Bereich 40. Dieser dritte Bereich 40 der Haltestruktur 20 ist als Gegenflansch zum Flansch 16 ausgebildet. Beispielsweise können in diesem dritten Bereich 40 Ohren mit Durchgangsöffnungen angeformt sein (nicht dargestellt), in welche Befestigungselemente, insbesondere Schrauben, aufgenommen werden können, die die Haltestruktur 20 mit dem Flansch 16 verbinden. Zwischen Haltestruktur 20 und Flansch 16 kann eine Sickendichtung (nicht dargestellt) angeordnet sein. Möglich wäre auch, ein thermisches Isolationselement vorzusehen, um die Haltestruktur 20 thermisch zu entkoppeln. An dem Bereich 40 der Haltestruktur 20 sind ebenfalls Aufnahmen 46, 48 vorgesehen, welche einen Einlass 50 und einen Auslass 52 für ein Kühlmittel 53 bilden.

Zwischen dem axial verlaufenden zweiten Bereich 38 der Haltestruktur 20 und dem Dosierventil 30 ist mindestens ein Kontaktelement 42 angeordnet, welches aus Graphit hergestellt und in einem leichten Presssitz zwischen der Haltestruktur 20 und dem Dosierventil 30 gehalten wird. In Einbaulage liegt eine innere Mantelfläche 54 des Kontaktelements 42 flächig an einer äußeren Mantelfläche 56 des Dosierventils 30 an. Ein äußere Mantelfläche 58 des Kontaktelements 42 liegt in gleicher Weise flächig an einer inneren Mantelfläche 60 der Haltestruktur 20 an. Demnach besteht ein thermisch optimaler Kontakt zwischen Dosierventil 30 und Haltestruktur 20. Ferner ist in dem axial verlaufenden zweiten Bereich 38 der Haltestruktur 20 eine Durchführungsdichtung 44 aufgenommen. Auf diese Weise wird auch das Dosierventil 30 zumindest mittelbar in der Haltestruktur 20 fixiert.

Insbesondere ist der axial verlaufende zweite Bereich 38 der Haltestruktur 20 dünnwandig ausgeführt, während der radial verlaufende erste Bereich 36 der Haltestruktur 20 eine dickere Materialstärke aufweist. Eine äußerer Abschnitt 62 der Haltestruktur 20 umgibt die Ventilspitze 31 ringförmig, wobei sich der äußere Abschnitt 62 in Richtung Ventilspitze 31 verjüngt.

In der Figur 2 ist ferner ein Hülsenelement 64 dargestellt, welches mit der Haltestruktur 20 verbunden ist. Das Hülsenelement 64 umschließt einen unteren Bereich der Haltestruktur 20, wobei es beispielsweise an einer unteren Fläche 66 des dritten Bereichs 40 der Haltestruktur 20 und an einer äußeren Mantelfläche 67 der Haltestruktur 20 im radial verlaufenden ersten Bereich 36 der Haltestruktur stoffschlüssig verbunden ist, beispielsweise verschweißt ist. Die entsprechenden Schweißstellen mit der Haltestruktur 20 können insbesondere entlang des zweiten Bereichs 38 der Haltestruktur derart variieren, dass das Hülsenelement 64 die Haltestruktur 20 mehr oder weniger umschließt.

Zwischen Hülsenelement 64 und Haltestruktur 20 ist ein Hohlraum 68 ausgebildet, welcher mit dem Einlass 50 und dem Auslass 52 einen Ringkanal 70 bildet, der über die Aufnahmen 46 und 48 an einen Kühlmittelkreislauf angeschlossen ist. Kühlmittel 53, beispielsweise Kühlwasser, wird über eine Pumpe zum Einlass 50 des Ringkanals 70 gefördert, durchströmt den Ringkanal 70 und wird über den Auslass 52 ausgeleitet. Das vergleichsweise kalte Kühlmittel 53, welches den Ringkanal 70 durchströmt, nimmt wirkungsvoll die Wärme auf, welche durch das Abgas auf das Dosierventil 30 übertragen wird, wobei die Wärme entlang des Wärmeübertragungspfads, Dosierventil 30, Kontaktelement 42 und Haltestruktur 20 wirkungsvoll abgeführt wird.

Insbesondere vorteilhaft ist, dass das Hülsenelement 64 derart gestaltet werden kann, dass das Volumen des Ringkanals 70 variiert werden kann. Das Hülsenelement 64 wird in unterschiedlichen Größen gefertigt, insbesondere kann das Hülsenelement 64 den zweiten Bereich 38 der Haltestruktur 20 mehr oder weniger umschließen, wobei eine gezielte und konstruktiv einfache Kühlung des Dosierventils 30 möglich ist. Ferner wird gewährleistet, dass in einem Bereich in der Umgebung der Dosierstelle 31, in welchem das Dosierventil 30 bzw. die Haltestruktur 20 mit Reduktionsmittel benetzt wird, die auf Grund der Einbaulage herrschenden hohen Temperaturen genutzt werden, um einer Kristallisationsbildung entgegen zu wirken. Darüberhinaus wird durch die Variation der Gestaltung des Hülsenelements 64 gewährleistet, dass diese konstruktiv an die Einbaubedingungen angepasst werden kann.

## Patentansprüche

1. Dosiermodul (18) mit einem Dosierventil (30) zum Einbringen eines flüssigen Stoffes, insbesondere eines Reduktionsmittels (26), in das Abgas einer Brennkraftmaschine (10) mit einer Haltestruktur (20), durch die das Dosierventil (30) wenigstens mittelbar an einem Flansch (16) insbesondere eines Abgasrohres (12) gehalten ist und einer Kühleinrichtung (21), umfassend ein zwischen Dosierventil (30) und Haltestruktur (20) angeordnetes Kontaktelement (42), wobei ein Ringkanal (70) der Kühleinrichtung (21) mit einem Einlass (50) und einem Auslass (52) verbunden ist, welche in der Haltestruktur (20) ausgebildet sind und von einem Kühlmittel durchströmt wird, und wobei die Haltestruktur (20) einen sich radial nach auswärts erstreckenden ersten Bereich (36) im Bereich der Ventilspitze (31) des Dosierventils (30), einen sich an diesen anschließenden und insgesamt axial, in einem Abstand zum Dosierventil (30) verlaufenden zweiten Bereich (38) und einen sich an diesen anschließenden wiederum radial auswärts sich erstreckenden dritten Bereich (40) umfaßt, **dadurch gekennzeichnet, dass** die Kühleinrichtung (21) ein Hülsenelement (64) umfasst, welches die Haltestruktur (20) zumindest teilweise derart umschließt, dass zwischen Haltestruktur (20) und Hülsenelement (64) der Ringkanal (70) gebildet ist, wobei der zweite Bereich (38) dünnwandig ausgeführt ist und der erste Bereich (36) eine dickere Materialstärke aufweist.

2. Dosiermodul (18) nach Anspruch 1, **dadurch gekennzeichnet, dass** das Kühlmittel Kühlwasser ist.

3. Dosiermodul (18) nach einem der vorhergehenden Ansprüche, **dadurch gekennzeichnet, dass** das Hülsenelement (64) aus einem hitzebeständigen Material, insbesondere als Umformteil gefertigt ist.

4. Dosiermodul (18) nach einem der vorhergehenden Ansprüche, **dadurch gekennzeichnet, dass** das Hülsenelement (64) in unterschiedlicher Größe gefertigt ist.

5. Dosiermodul (18) nach einem der vorhergehenden Ansprüche, **dadurch gekennzeichnet, dass** das Hülsenelement (64) mit der Haltestruktur (20) verschweißt ist.

6. Dosiermodul (18) nach einem der vorhergehenden Ansprüche, **dadurch gekennzeichnet, dass** an dem Hülsenelement (64) ein Hitzeschutzblech angeordnet ist

7. Dosiermodul (18) nach einem der vorhergehenden Ansprüche, **dadurch gekennzeichnet, dass** die Haltestruktur (20) in einem axial verlaufenden Bereich (38), der von dem Hülsenelement (64) umschlossen ist, mit einer geringeren Wandstärke ausgebildet ist.

8. Dosiermodul (18) nach einem der vorhergehenden Ansprüche, **dadurch gekennzeichnet, dass** das Kontaktelement (42) aus einem Material mit hoher Wärmeleitfähigkeit ist, insbesondere Graphit, und in flächigem thermischen Kontakt zumindest teilweise mit der Haltestruktur (20) und dem Dosierventil (30) steht.

9. Dosiermodul (18) nach einem der vorhergehenden Ansprüche, **dadurch gekennzeichnet, dass** an der Haltestruktur (20) ein sich axial erstreckender Bereich (40) angeformt ist, der einen Gegenflansch zum Flansch (16) des Abgasrohres (12) bildet.

10. Dosiermodul (18) nach einem der vorhergehenden Ansprüche, **dadurch gekennzeichnet, dass** zwischen Haltestruktur (20) und Flansch (16) des Abgasrohres (12) ein Dichtelement angeordnet ist, insbesondere eine Sickendichtung.

## Claims

1. Dosing module (18) having a dosing valve (30) for introducing a liquid substance, in particular a reducing agent (26), into the exhaust gas of an internal combustion engine (10), having a holding structure (20) by way of which the dosing valve (30) is held at least indirectly on a flange (16), in particular of an exhaust pipe (12), and having a cooling device (21) comprising a contact element (42) arranged between dosing valve (30) and holding structure (20), wherein a ring-shaped duct (70) of the cooling device (21) is connected to an inlet (50) and to an outlet (52) which are formed in the holding structure (20) and is flowed through by a coolant, and wherein the holding structure (20) comprises a radially outwardly extending first region (36) in the region of the valve tip (31) of the dosing valve (30), a second region (38) which adjoins said first region and which runs altogether axially with a spacing to the dosing valve (30), and a third region (40), which adjoins said second region and which in turn extends radially outward, **characterized in that** the cooling device (21) comprises a sleeve element (64) which at least partially surrounds the holding structure (20), **in that** the ring-shaped duct (70) is formed between holding structure (20) and sleeve element (64), wherein the second region (38) is of thin-walled form, and the first region (36) has a relatively large material thickness.

2. Dosing module (18) according to Claim 1, **characterized in that** the coolant is cooling water.

3. Dosing module (18) according to one of the preceding claims, **characterized in that** the sleeve element (64) is manufactured from a heat-resistant material, in particular as a formed part.

4. Dosing module (18) according to one of the preceding claims, **characterized in that** the sleeve element (64) is manufactured in different sizes.

5. Dosing module (18) according to one of the preceding claims, **characterized in that** the sleeve element (64) is welded to the holding structure (20).

6. Dosing module (18) according to one of the preceding claims, **characterized in that** a heat shield plate is arranged on the sleeve element (64).

7. Dosing module (18) according to one of the preceding claims, **characterized in that** the holding structure (20) is formed with a relatively small wall thickness in an axially running region (38) which is surrounded by the sleeve element (64).

8. Dosing module (18) according to one of the preceding claims, **characterized in that** the contact element (42) is composed of a material with high thermal conductivity, in particular graphite, and is in areal thermal contact at least partially with the holding structure (20) and with the dosing valve (30).

9. Dosing module (18) according to one of the preceding claims, **characterized in that**, on the holding structure (20), there is integrally formed an axially extending region (40) which forms a counterpart flange with respect to the flange (16) of the exhaust pipe (12).

10. Dosing module (18) according to one of the preceding claims, **characterized in that** a sealing element, in particular a beaded gasket, is arranged between holding structure (20) and flange (16) of the exhaust pipe (12).

## Revendications

1. Module de dosage (18) comprenant une soupape de dosage (30) pour introduire une substance fluide, en particulier un agent réducteur (26), dans le gaz d'échappement d'un moteur à combustion interne (10), comprenant une structure de fixation (20) qui fixe la soupape de dosage (30) au moins indirectement à une bride (16), en particulier d'un tuyau d'échappement (12), et un dispositif de refroidissement (21) comprenant un élément de contact (42) disposé entre la soupape de dosage (30) et la structure de fixation (20), un conduit annulaire (70) du dispositif de refroidissement (21) étant connecté à une entrée (50) et à une sortie (52) qui sont réalisées dans la structure de fixation (20) et étant parcouru par un réfrigérant, la structure de fixation (20) comprenant une première région (36) s'étendant radialement vers l'extérieur dans la région de la pointe de soupape (31) de la soupape de dosage (30), une deuxième région (38) se raccordant à celle-ci et s'étendant dans l'ensemble axialement, à distance de la soupape de dosage (30) et une troisième région (40) se raccordant à celle-ci et s'étendant à nouveau radialement vers l'extérieur, **caractérisé en ce que** le dispositif de refroidissement (21) comprend un élément de douille (64) qui entoure au moins en partie la structure de fixation (20) de telle sorte qu'entre la structure de fixation (20) et l'élément de douille (64) soit formé le conduit annulaire (70), la deuxième région (38) étant réalisée avec une paroi mince et la première région (36) présentant une plus grande épaisseur de matériau.

2. Module de dosage (18) selon la revendication 1, **caractérisé en ce que** le réfrigérant est de l'eau de refroidissement.

3. Module de dosage (18) selon l'une quelconque des revendications précédentes, **caractérisé en ce que** l'élément de douille (64) est fabriqué à partir d'un matériau résistant à la chaleur, en particulier sous forme de pièce façonnée.

4. Module de dosage (18) selon l'une quelconque des revendications précédentes, **caractérisé en ce que** l'élément de douille (64) est fabriqué en différentes tailles.

5. Module de dosage (18) selon l'une quelconque des revendications précédentes, **caractérisé en ce que** l'élément de douille (64) est soudé à la structure de fixation (20).

6. Module de dosage (18) selon l'une quelconque des revendications précédentes, **caractérisé en ce qu'**une tôle de protection contre la chaleur est disposée au niveau de l'élément de douille (64).

7. Module de dosage (18) selon l'une quelconque des revendications précédentes, **caractérisé en ce que** la structure de fixation (20) est réalisée avec une plus faible épaisseur de paroi dans une région s'étendant axialement (38) qui est entourée par l'élément de douille (64).

8. Module de dosage (18) selon l'une quelconque des revendications précédentes, **caractérisé en ce que** l'élément de contact (42) est fabriqué à partir d'un matériau de grande conductibilité thermique, en particulier du graphite, et est en contact thermique sur sa surface au moins en partie avec la structure de fixation (20) et la soupape de dosage (30).

9. Module de dosage (18) selon l'une quelconque des revendications précédentes, **caractérisé en ce qu'**une région s'étendant axialement (40) est façonnée sur la structure de fixation (20), laquelle forme une contre-bride à la bride (16) du tuyau d'échappement (12).

10. Module de dosage (18) selon l'une quelconque des revendications précédentes, **caractérisé en ce qu'**entre la structure de fixation (20) et la bride (16) du tuyau d'échappement (12) est disposé un élément d'étanchéité, en particulier un joint d'étanchéité de moulure.
